# EUROPÄISCHE PATENTSCHRIFT

(11) **EP 3 894 716 B1**
(45) Veröffentlichungstag und Bekanntmachung des Hinweises auf die Patenterteilung: **19.04.2023**
(21) Anmeldenummer: 19835589.3
(22) Anmeldetag: 09.12.2019
(51) Int. Cl.: F16C 33/74, F16C 17/10, F03D 80/70, F03D 80/80, F16J 15/16, F16C 33/10

(54) **GONDEL FÜR EINE WINDKRAFTANLAGE**
NACELLE FOR A WIND TURBINE
NACELLE POUR UNE ÉOLIENNE

(30) Priorität: 13.12.2018 AT 511132018
(43) Veröffentlichungstag der Anmeldung: 20.10.2021
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2019/060425
(87) Internationale Veröffentlichungsnummer: WO 2020/118333

(56) Entgegenhaltungen:
- EP-A1- 2 863 076
- WO-A1-2014/173808
- CN-A- 106 884 972
- CN-A- 108 167 442
- DE-A1- 10 064 261
- KR-A- 20140 143 620

## Beschreibung

Die Erfindung betrifft eine Gondel für eine Windkraftanlage, sowie eine mit der Gondel ausgestattete Windkraftanlage.

Aus der EP2863076A1 ist eine Rotorlagerung für eine Gondel einer Windkraftanlage bekannt. Die aus der EP2863076A1 bekannte Rotorlagerung weist eine nur geringe Energieeffizienz auf.

Eine weitere Gondel für eine Windkraftanlage ist aus der WO 2014173808 A1 bekannt.

Aufgabe der vorliegenden Erfindung war es, die Nachteile des Standes der Technik zu überwinden und eine Gondel für eine Windkraftanlage mit verbesserter Energieeffizienz zu schaffen.

Diese Aufgabe wird durch eine Gondel und eine Windkraftanlage gemäß den Ansprüchen gelöst.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein ölgeschmiertes Gleitlagerelement ausgebildet ist. Zwischen dem Gondelgehäuse und der Rotornabe und/oder zwischen dem Gondelgehäuse und einer Rotorwelle ist ein Dichtungselement ausgebildet. Das Dichtungselement ist zum Abdichten eines Schmierölsumpfes ausgebildet, wobei der Schmierölsumpf zur Aufnahme jenes Schmieröles dient, welches zur Schmierung des ölgeschmierten Gleitlagerelementes dient.

Die erfindungsgemäße Gondel weist den Vorteil auf, dass mittels des Dichtungselementes eine verbesserte Abdichtung der Gondel erreicht werden kann, was besonders die Verwendung von hydrodynamischen Gleitlagern zum Einsatz in der Rotorlagerung ermöglicht.

Weiters kann es zweckmäßig sein, wenn das Dichtungselement als Axialdichtung ausgebildet ist, welche zwischen einer Stirnseite des Gondelgehäuses und einer Stirnseite der Rotornabe angeordnet ist.

In einer Alternative kann vorgesehen sein, dass das Dichtungselement als Radialdichtung ausgebildet ist, welche zwischen dem Gondelgehäuse und der Rotornabe und/oder zwischen dem Gondelgehäuse und der Rotorwelle angeordnet ist.

Darüber hinaus kann vorgesehen sein, dass das Dichtungselement als Gleitringdichtung ausgebildet ist. Besonders mittels einer Gleitringdichtung kann eine gute Abdichtwirkung zur Abdichtung der Gondel erreicht werden.

Vorteilhaft ist auch eine Ausprägung, gemäß welcher vorgesehen sein kann, dass das Dichtungselement zumindest zwei Segmente umfasst, welche in radialer Richtung über die Rotorwelle stülpbar sind. Dies bringt den Vorteil mit sich, dass das Dichtungselement einfach gewechselt werden kann, ohne dass die Rotorwelle ausgebaut werden muss. Diese Erleichterung in der Wartung der Rotorwelle kann insbesondere dadurch erreicht werden, dass das Dichtungselement nicht vollumfänglich geschlossen ist, sondern einen segmentierten Aufbau aufweist, und somit geöffnet werden kann, um dieses radial über die Welle stülpen zu können.

Gemäß einer Weiterbildung ist es möglich, dass das Dichtungselement als Labyrinth-Dichtung ausgebildet ist. Besonders eine Labyrinthdichtung kann im vorliegenden Einsatzfall eine lange Lebensdauer aufweisen und besonders dann, wenn das Dichtungselement nicht in den Schmierölsumpf eintaucht, auch eine ausreichende Dichtwirkung aufweisen.

Ferner kann es zweckmäßig sein, wenn die Labyrinth-Dichtung einen Rücklauf aufweist, welcher in einen Schmierölsumpf führt. Durch diese Maßnahme kann ein unerwünschter Schmiermittelaustritt aus der Gondel weitestgehend vermieden werden. Der Rücklauf kann beispielsweise in Form einer Bohrung realisiert sein, welche von einer Senke des Dichtlabyrinthes in Richtung zum Schmierölsumpf führt. Der Rücklauf kann jedoch auch dadurch gebildet sein, dass eine dem Schmierölsumpf näherliegende Innenwandung am Labyrinth niedriger ist als eine zum Schmierölsumpf weiter entfernt liegende Außenwandung am Labyrinth.

Darüber hinaus kann vorgesehen sein, dass das Dichtungselement im Gondelgehäuse aufgenommen ist und die Rotornabe relativ zum Dichtungselement verdrehbar ist. Besonders eine derart ausgebildete Dichtung bzw. derart ausgebildete Einbausituation der Dichtung führt zu einem möglichst geringen Verschleiß des Dichtungselementes. Dadurch kann die Langlebigkeit des Dichtungselementes erhöht werden.

Weiters kann vorgesehen sein, dass das Dichtungselement eine Dichtfläche kontaktiert, welche relativ zum Dichtungselement bewegbar ist, wobei die Dichtfläche eine Gleitlackbeschichtung aufweist. Besonders bei einem derartigen Aufbau des Dichtungselementes kann die Langlebigkeit der Windkraftanlage erhöht werden.

Gemäß einer besonderen Ausprägung ist es möglich, dass an der Rotornabe oder an der Rotorwelle eine Gleithülse angeordnet ist, welche mit dem Dichtungselement zusammenwirkt. Besonders bei Verwendung einer Gleithülse kann die Langlebigkeit des Dichtungselementes erhöht werden.

Entsprechend einer vorteilhaften Weiterbildung kann vorgesehen sein, dass an der Rotorwelle ein Ölabtropfelement in Form einer Einstechnut oder einer Erhebung ausgebildet ist. Durch diese Maßnahmen kann erreicht werden, dass die Dichtwirkung des Dichtungselementes verbessert werden kann.

Insbesondere kann es vorteilhaft sein, wenn axial zueinander beabstandet zwei Dichtungselemente ausgebildet sind. Somit kann in Axialrichtung der Rotationsachse gesehen, der Schmierölsumpf zu beiden Richtungen abgedichtet werden, um an einer Seite einen Austritt von Schmieröl aus der Gondel zu verhindern und an einer zweiten Seite das Schmieröl im Gondelgehäuse im Bereich des Schmierölsumpfes zu binden.

Ferner kann vorgesehen sein, dass zwischen dem Gondelgehäuse und der Rotornabe und/oder zwischen dem Gondelgehäuse und einer Rotorwelle ein Dichtungselement ausgebildet ist.

Vorzugsweise umfasst die Dichtfläche einen Werkstoff der ausgewählt ist aus einer Gruppe umfassend Aluminiumbasislegierungen, Bismutbasislegierungen, Silberbasislegierungen, Gleitlacke. Insbesondere diese verschleißresistenten und tribologisch besonders wirksamen Werkstoffe haben sich in Windkraftanlagen mit hoher Leistungsdichte als besonders vorteilhaft herausgestellt. Überraschenderweise sind besonders Gleitlacke als Gleitschicht gut einsetzbar, obwohl diese eine Härte nach Vickers von ca. 25 HV (0,001) bis 60 HV (0,001) aufweisen, also deutlich weicher sind, als voranstehend beschriebene Gleitschichten, wobei hier eine Steigerung der Härte durch Zugabe von entsprechenden Hartpartikeln möglich ist.

Es besteht weiters die Möglichkeit, dass auf der Dichtfläche eine polymerbasierte Einlaufschicht angeordnet ist, um damit eine bessere Anpassungsfähigkeit der Dichtfläche an das Dichtungselement während des Einlaufens des Dichtungselementes zu erreichen.

Als Gleitlacke können zum Beispiel verwendet werden Polytetrafluorethylen, fluorhältige Harze, wie z.B. Perfluoralkoxy-Copolymere, Polyfluoralkoxy-Polytetrafluorethylen-Copolymere, Ethylen-tetrafluorethylen, Polychlortrifluorethylen, fluorierte Ethylen-Propylen Copolymere, Polyvinylfluorid, Polyvinylidenfluorid, alternierende Copolymere, statistische Copolymere, wie z.B. Perfluorethylenpropylen, Polyesterimide, Bismaleimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikone, Polyarylether, Polyarylketone, Polyaryletherketone, Polyaryletheretherketone, Polyetheretherketone, Polyetherketone, Polyvinylidendiflouride, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide, sowie Copolymere daraus.

Eine Druckerhöhungsvorrichtung im Sinne dieses Dokumentes ist eine Vorrichtung die dazu ausgebildet ist, durch externe Energiezuführung den Druck des Schmieröles zu erhöhen. Eine derartige Druckerhöhungsvorrichtung ist beispielsweise eine Hydraulikpumpe.

Eine Gondel im Sinne dieses Dokumentes umfasst neben einem Gondelgehäuse auch eine Rotornabe und eine Rotorlagerung zur Lagerung der Rotornabe.

Das innere Ringelement bzw. das äußere Ringelement können jeweils als eigenständige Bauteile ausgebildet sein, welche mit der Rotornabe oder Rotorwelle bzw. mit dem Gondelgehäuse gekoppelt sein können. Alternativ dazu ist es auch denkbar, dass das innere Ringelement als integraler Bestandteil der Rotornabe bzw. der Rotorwelle ausgebildet ist. Alternativ dazu ist es auch denkbar, dass das äußere Ringelement als integraler Bestandteil der Rotornabe bzw. der Rotorwelle ausgebildet ist. Alternativ dazu ist es auch denkbar, dass das innere Ringelement als integraler Bestandteil des Gondelgehäuses ausgebildet ist. Alternativ dazu ist es auch denkbar, dass das äußere Ringelement als integraler Bestandteil des Gondelgehäuses ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt einer Gondel in einer stark schematischen Darstellung;
- Fig. 3: ein Querschnitt der Gondel mit Strömungskanal im äußeren Ringelement;
- Fig. 4: eine Schnittansicht des äußeren Ringelementes mit Strömungskanal;
- Fig. 5: ein Querschnitt einer Gondel mit geteiltem Gondelgehäuse in einer stark schematischen Darstellung;
- Fig. 6: ein Ausführungsbeispiel einer Schleifringdichtung mit an einer Hülse ausgebildeter Gleitfläche;
- Fig. 7: ein Ausführungsbeispiel einer Labyrinthdichtung mit Ölablauf.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

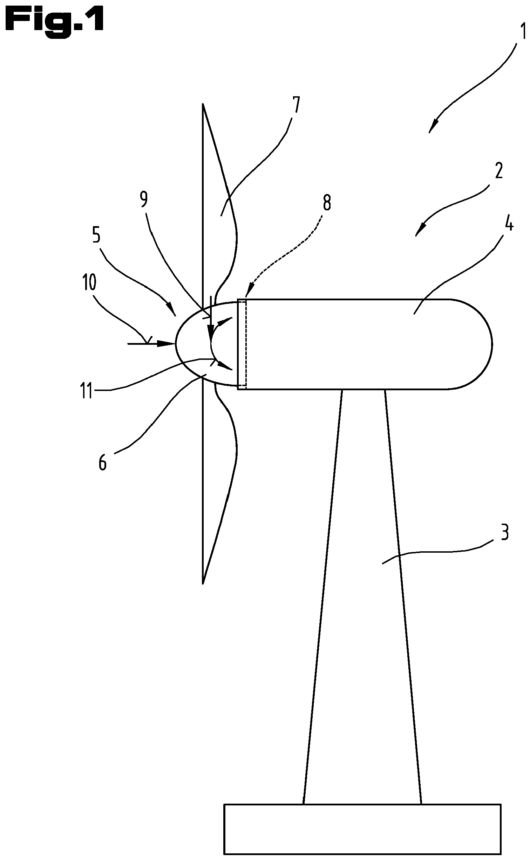

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

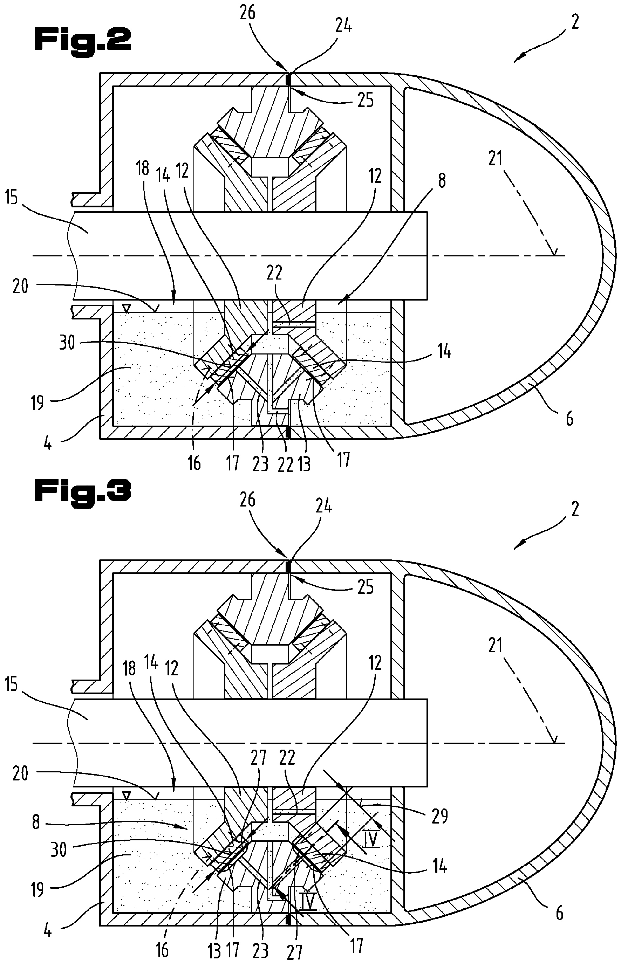

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14 angeordnet.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 15 ausgebildet ist, an welcher die Rotornabe 6 angeordnet ist. Das innere Ringelement 12 kann direkt an der Rotorwelle 15 aufgenommen sein.

In einem weiteren, nicht dargestellten Ausführungsbeispiel kann natürlich auch vorgesehen sein, dass das innere Ringelement 12 direkt an der Rotornabe 6 aufgenommen ist.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet zwei Gleitlagerelemente 14 ausgebildet sind, welche in einem Winkel zueinander angeordnet sind. Wie aus Fig. 2 ersichtlich, kann in einem Ausführungsbeispiel vorgesehen sein, dass die Gleitlagerelemente 14 mittels Befestigungsmittel 16 am inneren Ringelement 12 befestigt sind. Somit kann zwischen den Gleitlagerelementen 14 und dem äußeren Ringelement 13 eine Gleitfläche 17 ausgebildet sein. Bei einer Anordnung der Gleitlagerelemente 14, wie sie in Fig. 2 dargestellt ist, können die Gleitflächen 17 ebenfalls V-förmig angeordnet sein.

Wie aus Fig. 2 ebenfalls ersichtlich, kann vorgesehen sein, dass das innere Ringelement 12 bezüglich dessen axialer Erstreckung geteilt ausgeführt ist um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußeren Ringelement 13 in dessen axialer Erstreckung geteilt ausgeführt ist.

Sowohl bei einer Ausführung mit in axialer Erstreckung geteiltem inneren Ringelement 12, als auch bei einer Ausführung mit in axialer Erstreckung geteiltem äußeren Ringelement 13 kann vorgesehen sein, dass die Einzelteile des jeweils geteilt ausgeführten Ringelementes 12, 13 axial zueinander verstellbar ausgebildet sind, um beispielsweise den Verschleiß der Gleitlagerelemente 14 kompensieren zu können. Insbesondere kann vorgesehen sein, dass durch die axiale Verstellbarkeit der Einzelteile der Ringelemente 12, 13 zueinander der Lagerspalt eingestellt werden kann.

Wie aus Fig. 2 weiters ersichtlich, ist vorgesehen, dass ein Schmierölsumpf 18 ausgebildet ist, welcher zur Aufnahme von Schmieröl 19 dient. Im Betriebszustand wird der Schmierölsumpf 18 bis zu einem Schmierölniveau 20 mit Schmieröl 19 befüllt. Das Schmierölniveau 20 ist hierbei so gewählt, dass die Gleitflächen 17 zumindest abschnittsweise unterhalb des Schmierölniveaus 20 liegen und somit in das im Schmierölsumpf 18 befindliche Schmieröl 19 eintauchen.

Die Gleitlagerelemente 14 sind als hydrodynamische Gleitlager ausgebildet, wodurch sich bei Drehung der Rotornabe 6 um eine Rotorachse 21 ein Schmierölfilm an der Gleitfläche 17 ausbildet, welcher zur hydrodynamischen Lagerung des Gleitlagerelementes 14 dient.

Zur Zuführung von Schmieröl 19 zur Gleitfläche 17 kann vorgesehen sein, dass im inneren Ringelement 12 bzw. im äußeren Ringelement 13 Schmierölbohrungen 22 ausgebildet sind, welche je nach Rotationsstellung der Rotornabe 6 an einem ersten Längsende in den Schmierölsumpf 18 einmünden und an deren zweiten Längsende in einen Zwischenraum zwischen dem inneren Ringelement 12 und dem äußeren Ringelement 13 einmünden. Durch diese Maßnahme kann erreicht werden, dass ausreichend Schmieröl 19 zum Gleitlagerelement 14 zugeführt werden kann.

Weiters können auch Schmierölbohrungen 23 vorgesehen sein, welche direkt in die Gleitfläche 17 münden. Mittels dieser Schmierölbohrungen 23 kann die Gleitfläche 17 direkt mit dem Schmierölsumpf 18 strömungsverbunden sein, sodass ausreichend Schmieröl 19 zur Gleitfläche 17 zugeführt werden kann. Insbesondere kann vorgesehen sein, dass durch die Bewegung des Gleitlagerelements 14 relativ zum äußeren Ringelement 13 Schmieröl 19 via die Schmierölbohrung 23 bzw. die Schmierölbohrung 22 in die Gleitfläche 17 gesaugt wird und dort ein Schmierölfilm zur Schmierung bzw. zur Lagerung des Gleitlagerelements 14 aufgebaut wird.

Um eine gute Schmierwirkung des Gleitlagerelements 14 zu erreichen, kann vorgesehen sein, dass wie in Fig. 2 dargestellt, zumindest ein Abschnitt der Gleitfläche 17 über dessen Breite gesehen, zur Gänze unterhalb des Schmierölniveau 20 liegt.

Weiters kann vorgesehen sein, dass ein Dichtungselement 24 ausgebildet ist, welches zur Abdichtung der Rotornabe 6 zum Gondelgehäuse 4 dient. Wie aus Fig. 2 ersichtlich, kann vorgesehen sein, dass das Dichtungselement 24 zwischen einer Stirnseite 25 des Gondelgehäuses 4 und zwischen einer Stirnseite 26 der Rotornabe 6 wirkt. Insbesondere kann vorgesehen sein, dass sich der Schmierölsumpf 18 sowohl über das Gondelgehäuse 4 als auch über die Rotornabe 6 erstreckt und somit das Dichtungselement 24 abschnittsweise unterhalb des Schmierölniveau 20 liegt.

Wie aus Fig. 2 weiters ersichtlich, kann vorgesehen sein, dass das Dichtungselement 24 im Gondelgehäuse 4 aufgenommen ist.

In der Fig. 3 ist eine weitere und gegebenenfalls für sich eigenständige Ausführungsform der Gondel 2 gezeigt, wobei wiederum für gleiche Teile gleiche Bezugszeichen bzw. Bauteilbezeichnungen wie in den vorangegangenen Figuren 1 bis 2 verwendet werden. Um unnötige Wiederholungen zu vermeiden, wird auf die detaillierte Beschreibung in den vorangegangenen Figuren 1 bis 2 hingewiesen bzw. Bezug genommen.

Wie aus Fig. 3 ersichtlich, kann vorgesehen sein, dass im äußeren Ringelement 13 ein Strömungskanal 27 ausgebildet ist, welcher mit den Schmierölbohrungen 23 strömungsverbunden ist und zur besseren Verteilung von Schmieröl 19 in der Gleitfläche 17 dient.

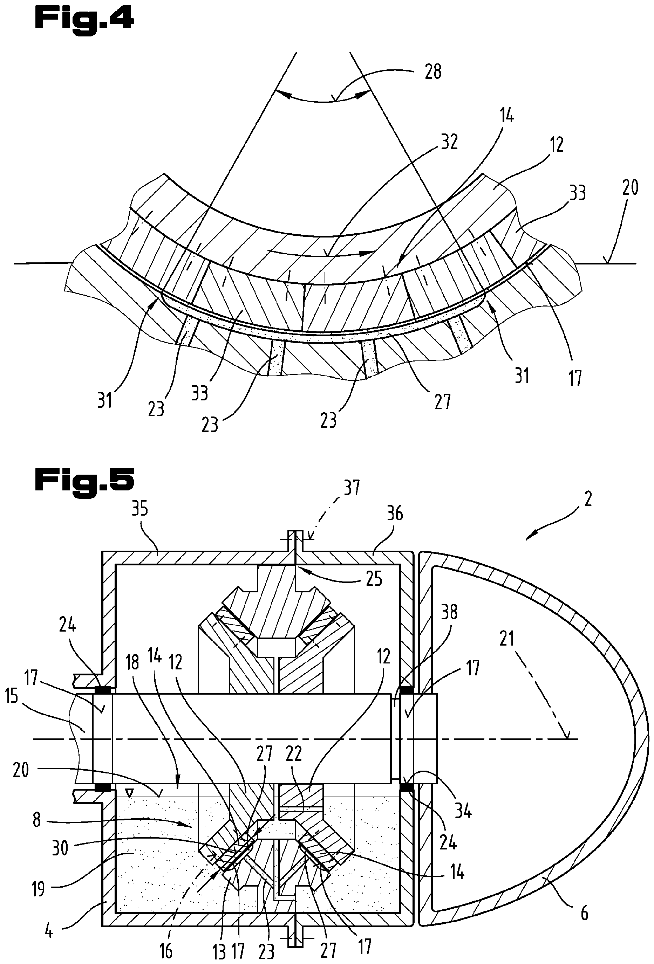

Fig. 4 zeigt eine Schnittansicht gemäß der Schnittlinie IV - IV aus Fig. 3. Wie aus Fig. 4 ersichtlich, kann vorgesehen sein, dass der Strömungskanal 27 sich über einen Strömungskanalwinkel 28 erstreckt, welcher vorzugsweise so gewählt ist, dass der Strömungskanal 27 zur Gänze unterhalb des Schmierölniveau 20 angeordnet ist. Insbesondere kann vorgesehen sein, dass der Strömungskanalwinkel 28 zwischen 10° und 160°, bevorzugt zwischen 45° und 80° beträgt.

Weiters ist vorgesehen, dass eine Strömungskanalbreite 29 so gewählt ist, dass sie kleiner ist als eine Breite 30 des Gleitlagerelements 14. Wie aus Fig. 4 ersichtlich, kann vorgesehen sein, dass mehrere der Schmierölbohrungen 23 in den Strömungskanal 27 einmünden. Weiters kann vorgesehen sein, dass der Strömungskanal 27 in Form eines Keilspaltes 31 ausläuft. Durch diese Maßnahme kann ein Schmierfilm aufgebaut werden.

In einem ersten Ausführungsbeispiel kann vorgesehen sein, dass der Strömungskanal 27 in Umfangsrichtung beidseits in Form eines Keilspaltes 31 ausläuft.

In einem weiteren Ausführungsbeispiel kann vorgesehen sein, dass in Hauptdrehrichtung 32 gesehen, nur am Ende des Strömungskanals 27 der Keilspalt 31 ausgebildet ist.

Wie aus Fig. 4 weiters ersichtlich, kann vorgesehen sein, dass das Gleitlagerelement 14 mehrere Gleitlagerpads 33 aufweist, welche über den Umfang verteilt am inneren Ringelement 12 angeordnet sind. Die Gleitlagerpads 33 können insbesondere derart am inneren Ringelement 12 angeordnet sein, dass eine durchgängige Gleitfläche 17 ausgebildet ist, welche als hydrodynamisches Lager wirken kann. Insbesondere kann vorgesehen sein, dass die Gleitfläche 17 die Form eines Kegelstumpfes aufweist.

In der Fig. 5 ist eine weitere und gegebenenfalls für sich eigenständige Ausführungsform der Gondel 2 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass der Schmierölsumpf 18 zur Gänze im Gondelgehäuse 4 ausgebildet ist. Insbesondere kann hierbei vorgesehen sein, dass die Dichtungselemente 24, insbesondere deren Dichtfläche 34, zur Gänze oberhalb des Schmierölniveau 20 liegt. Um den Zusammenbau bzw. die Wartung eines derart aufgebauten Gondelgehäuses 4 bzw. Rotorlagerung 8 zu ermöglichen bzw. zu vereinfachen, kann vorgesehen sein, dass das Gondelgehäuse 4 einen Gehäusehauptteil 35 und einen Schmierölsumpfdeckel 36 aufweist. Insbesondere kann vorgesehen sein, dass der Gehäusehauptteil 35 und der Schmierölsumpfdeckel 36 den Schmierölsumpf 18 umgrenzen. Hierbei kann vorgesehen sein, dass der Schmierölsumpfdeckel 36 mittels eines Befestigungselements 37 am Gehäusehauptteil 35 befestigt ist.

Wie aus Fig. 5 ersichtlich, kann vorgesehen sein, dass in Axialrichtung der Rotorachse 21 gesehen, beiderseits des Schmierölsumpfes 18 jeweils ein Dichtungselement 24 angeordnet ist. Insbesondere kann vorgesehen sein, dass die Dichtungselemente 24 als Radialrichtung ausgebildet sind. Eines der Dichtungselemente 24 kann hierbei im Gehäusehauptteil 35 angeordnet sein, das zweite der Dichtungselemente 24 kann im Schmierölsumpfdeckel 36 angeordnet sein.

Weiters kann vorgesehen sein, dass die Dichtungselemente 24 mit der Rotorwelle 15 zusammenwirken. Insbesondere kann hierbei vorgesehen sein, dass die Gleitfläche 17 an der Rotorwelle 15 ausgebildet ist. Insbesondere kann vorgesehen sein, dass die Rotorwelle 15 hierzu lokal eine besonders ausgebildete Oberfläche aufweist, welche beispielsweise durch eine Gleitlackbeschichtung gebildet wird. Eine derartige Gleitlackbeschichtung kann insbesondere bei der Verwendung von Schleifringdichtungen vorgesehen sein.

Weiters kann vorgesehen sein, dass an der Rotorwelle 15 ein Ölabtropfelement 38 ausgebildet ist, welches dazu dient, dass das Schmieröl 19 nicht entlang der Rotorwelle 15 in Axialrichtung zum Dichtungselement 24 gelangt. Das Ölabtropfelement 38 kann beispielsweise in Form einer Einstechnut ausgebildet sein. In einer alternativen Ausführungsvariante kann auch vorgesehen sein, dass das Ölabtropfelement 38 beispielsweise in Form einer umlaufenden Erhebung an der Rotorwelle 15 ausgebildet ist.

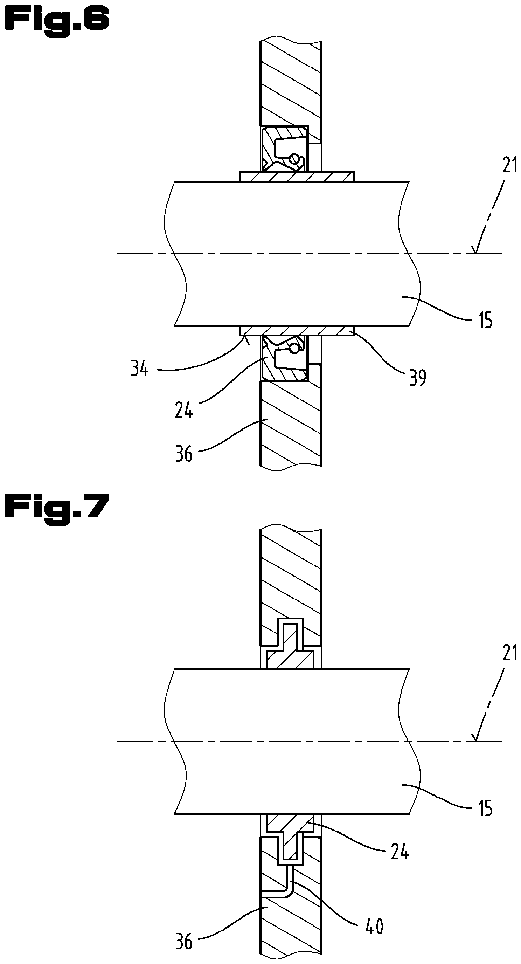

Fig. 6 zeigt in einer Detailansicht ein weiteres Ausführungsbeispiel der Anordnung des Dichtungselementes 24. Wie aus Fig. 6 ersichtlich, kann vorgesehen sein, dass an der Rotorwelle 15 eine Gleithülse 39 angeordnet ist, an welcher Gleithülse 39 die Dichtfläche 34 ausgebildet ist. Eine derartige Anordnung kann insbesondere bei der Verwendung von Schleifringdichtungen sinnvoll sein.

In einem weiteren nicht dargestellten Ausführungsbeispiel kann auch vorgesehen sein, dass die Gleithülse 39 direkt an der Rotornabe 6 aufgenommen ist und das Dichtungselement 24 somit zur Abdichtung der Rotornabe 6 dient.

Fig. 7 zeigt ein weiteres Ausführungsbeispiel des Dichtungselements 24. Wie aus Fig. 7 ersichtlich, kann vorgesehen sein, dass das Dichtungselement 24 in Form einer Labyrinthdichtung ausgebildet ist, welche beispielsweise mit dem Schmierölsumpfdeckel 36 zusammenwirkt. Insbesondere kann vorgesehen sein, dass ein Rücklauf 40 ausgebildet ist, welcher zur Rückführung von Schmieröl 19 in den Schmierölsumpf 18 dient. Der Rücklauf kann, wie in Fig. 7 ersichtlich, in Form einer Bohrung ausgebildet sein, welche vom tiefsten Punkt der Labyrinthdichtung ausgehend in den Schmierölsumpf 18 führt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Windkraftanlage | 31 | Keilspalt |
| 2 | Gondel | 32 | Hauptdrehrichtung |
| 3 | Turm | 33 | Gleitlagerpad |
| 4 | Gondelgehäuse | 34 | Dichtfläche |
| 5 | Rotor | 35 | Gehäusehauptteil |
| 6 | Rotornabe | 36 | Schmierölsumpfdeckel |
| 7 | Rotorblatt | 37 | Befestigungselement |
| 8 | Rotorlagerung | 38 | Ölabtropfelement |
| 9 | Radialkraft | 39 | Gleithülse |
| 10 | Axialkraft | 40 | Rücklauf |
| 11 | Kippmoment | | |
| 12 | inneres Ringelement | | |
| 13 | äußeres Ringelement | | |
| 14 | Gleitlagerelement | | |
| 15 | Rotorwelle | | |
| 16 | Befestigungsmittel | | |
| 17 | Gleitfläche | | |
| 18 | Schmierölsumpf | | |
| 19 | Schmieröl | | |
| 20 | Schmierölniveau | | |
| 21 | Rotorachse | | |
| 22 | Schmierölbohrung Ringelement | | |
| 23 | Schmierölbohrung | | |
| 24 | Dichtungselement | | |
| 25 | Stirnseite Gondelgehäuse | | |
| 26 | Stirnseite Rotornabe | | |
| 27 | Strömungskanal | | |
| 28 | Strömungskanalwinkel | | |
| 29 | Strömungskanalbreite | | |
| 30 | Breite Gleitlagerelement | | |

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein ölgeschmiertes Gleitlagerelement (14) ausgebildet ist, wobei ein Schmierölsumpf (18) ausgebildet ist, welcher zur Aufnahme jenes Schmieröles (19) dient, welches zur Schmierung des ölgeschmierten Gleitlagerelementes (14) dient, wobei der Schmierölsumpf (18) in der Gondel (2) ausgebildet ist,
**dadurch gekennzeichnet, dass** zwischen dem Gondelgehäuse (4) und der Rotornabe (6) und/oder zwischen dem Gondelgehäuse (4) und einer Rotorwelle (15) ein Dichtungselement (24) ausgebildet ist, welches zum Abdichten des Schmierölsumpfes (18) zur Umwelt ausgebildet ist, wobei im Betriebszustand der Schmierölsumpf (18) bis zu einem Schmierölniveau (20) mit Schmieröl (19) befüllt ist, wobei die Gleitflächen (17) zumindest abschnittsweise unterhalb des Schmierölniveaus (20) liegen und somit in das im Schmierölsumpf (18) befindliche Schmieröl (19) eintauchen.

2. Gondel (2) nach Anspruch 1, **dadurch gekennzeichnet, dass** das Dichtungselement (24) als Axialdichtung ausgebildet ist, welche zwischen einer Stirnseite (25) des Gondelgehäuses (4) und einer Stirnseite (26) der Rotornabe (6) angeordnet ist.

3. Gondel (2) nach Anspruch 1, **dadurch gekennzeichnet, dass** das Dichtungselement (24) als Radialdichtung ausgebildet ist, welche zwischen dem Gondelgehäuse (4) und der Rotornabe (6) und/oder zwischen dem Gondelgehäuse (4) und der Rotorwelle (15) angeordnet ist.

4. Gondel (2) nach einem der vorhergehenden Ansprüche, **dadurch gekennzeichnet, dass** das Dichtungselement (24) als Gleitringdichtung ausgebildet ist.

5. Gondel (2) nach einem der vorhergehenden Ansprüche, **dadurch gekennzeichnet, dass** das Dichtungselement (24) zumindest zwei Segmente umfasst, welche in radialer Richtung über die Rotorwelle (15) stülpbar sind.

6. Gondel (2) nach einem der Ansprüche 1 bis 3, **dadurch gekennzeichnet, dass** das Dichtungselement (24) als Labyrinth-Dichtung ausgebildet ist.

7. Gondel (2) nach Anspruch 6, **dadurch gekennzeichnet, dass** die Labyrinth-Dichtung einen Rücklauf (40) aufweist, welcher in einen Schmierölsumpf (18) führt.

8. Gondel (2) nach einem der vorhergehenden Ansprüche, **dadurch gekennzeichnet, dass** das Dichtungselement (24) im Gondelgehäuse (4) aufgenommen ist und die Rotornabe (6) relativ zum Dichtungselement (24) verdrehbar ist.

9. Gondel (2) nach einem der vorhergehenden Ansprüche, **dadurch gekennzeichnet, dass** das Dichtungselement (24) eine Dichtfläche (34) kontaktiert, welche relativ zum Dichtungselement (24) bewegbar ist, wobei die Dichtfläche (34) eine Gleitlackbeschichtung aufweist.

10. Gondel (2) nach einem der vorhergehenden Ansprüche, **dadurch gekennzeichnet, dass** an der Rotornabe (6) oder an der Rotorwelle (15) eine Gleithülse (39) angeordnet ist, welche mit dem Dichtungselement (24) zusammenwirkt.

11. Gondel (2) nach einem der vorhergehenden Ansprüche, **dadurch gekennzeichnet, dass** an der Rotorwelle (15) ein Ölabtropfelement (38) in Form einer Einstechnut oder einer Erhebung ausgebildet ist.

12. Gondel (2) nach einem der vorhergehenden Ansprüche, **dadurch gekennzeichnet, dass** axial zueinander beabstandet zwei Dichtungselemente (24) ausgebildet sind.

13. Windkraftanlage (1) mit einer Gondel (2), die Gondel (2) umfassend:
- ein Gondelgehäuse (4);
- eine Rotornabe (6) mit daran angeordneten Rotorblättern;
- eine Rotorlagerung (8) zur Lagerung der Rotornabe (6) im Gondelgehäuse (4), wobei die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein ölgeschmiertes Gleitlagerelement (14) ausgebildet ist, wobei ein Schmierölsumpf (18) ausgebildet ist, welcher zur Aufnahme jenes Schmieröles (19) dient, welches zur Schmierung des ölgeschmierten Gleitlagerelementes (14) dient, wobei der Schmierölsumpf (18) in der Gondel (2) ausgebildet ist,
**dadurch gekennzeichnet, dass** zwischen dem Gondelgehäuse (4) und der Rotornabe (6) und/oder zwischen dem Gondelgehäuse (4) und einer Rotorwelle (15) ein Dichtungselement (24) ausgebildet ist, welches zum Abdichten des Schmierölsumpfes (18) zur Umwelt ausgebildet ist, wobei im Betriebszustand der Schmierölsumpf (18) bis zu einem Schmierölniveau (20) mit Schmieröl (19) befüllt ist, wobei die Gleitflächen (17) zumindest abschnittsweise unterhalb des Schmierölniveaus (20) liegen und somit in das im Schmierölsumpf (18) befindliche Schmieröl (19) eintauchen.

## Claims

1. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), wherein the rotor bearing (8) has at least one inner ring element (12) and at least one outer ring element (13), wherein at least one oil-lubricated sliding bearing element (14) is formed between the inner ring element (12) and the outer ring element (13), wherein a lubricating oil sump (18) is formed, which serves to receive that lubricating oil (19) which serves to lubricate the oil-lubricated sliding bearing element (14), wherein the lubricating oil sump (18) is formed in the nacelle (2),
**characterized in that** a sealing element (24) is formed between the nacelle housing (4) and the rotor hub (6) and/or between the nacelle housing (4) and a rotor shaft (15), which sealing element (24) is configured to seal the lubricating oil sump (18) from the environment, wherein in the operating state, the lubricating oil sump (18) is filled with lubricating oil (19) up to a lubricating oil level (20), wherein the sliding surfaces (17) are below the lubricating oil level (20) at least in some sections, and thus are immersed in the lubricating oil (19) present in the lubricating oil sump (18).

2. The nacelle (2) according to claim 1, **characterized in that** the sealing element (24) is designed as an axial seal, which is arranged between a front side (25) of the nacelle housing (4) and a front side (26) of the rotor hub (6).

3. The nacelle (2) according to claim 1, **characterized in that** the sealing element (24) is designed as a radial seal, which is arranged between the nacelle housing (4) and the rotor hub (6) and/or between the nacelle housing (4) and the rotor shaft (15).

4. The nacelle (2) according to one of the preceding claims, **characterized in that** the sealing element (24) is designed as an end-face mechanical seal.

5. The nacelle (2) according to one of the preceding claims, **characterized in that** the sealing element (24) comprises at least two segments, which can be put over the rotor shaft (15) in a radial direction.

6. The nacelle (2) according to one of claims 1 to 3, **characterized in that** the sealing element (24) is provided in the form of a labyrinth seal.

7. The nacelle (2) according to claim 6, **characterized in that** the labyrinth seal has a return line (40) which leads into a lubricating oil sump (18).

8. The nacelle (2) according to one of the preceding claims, **characterized in that** the sealing element (24) is accommodated in the nacelle housing (4) and the rotor hub (6) is rotatable relative to the sealing element (24).

9. The nacelle (2) according to one of the preceding claims, **characterized in that** the sealing element (24) contacts a sealing surface (34), which is movable relative to the sealing element (24), wherein the sealing surface (34) has a sliding lacquer coating.

10. The nacelle (2) according to one of the preceding claims, **characterized in that** a sliding sleeve (39) is arranged on the rotor hub (6) or on the rotor shaft (15), which sliding sleeve (39) interacts with the sealing element (24).

11. The nacelle (2) according to one of the preceding claims, **characterized in that** an oil drip element (38) in the form of a plunge-cut groove or of an elevation is formed on the rotor shaft (15).

12. The nacelle (2) according to one of the preceding claims, **characterized in that** two sealing elements (24), which are axially spaced apart from each other, are formed.

13. A wind turbine (1) having a nacelle (2), the nacelle (2) comprising:
- a nacelle housing (4);
- a rotor hub (6) with rotor blades arranged thereon;
- a rotor bearing (8) for bearing the rotor hub (6) in the nacelle housing (4), wherein the rotor bearing (8) has at least one inner ring element (12) and at least one outer ring element (13), wherein at least one oil-lubricated sliding bearing element (14) is formed between the inner ring element (12) and the outer ring element (13), wherein a lubricating oil sump (18) is formed, which serves to receive that lubricating oil (19) which serves to lubricate the oil-lubricated sliding bearing element (14), wherein the lubricating oil sump (18) is formed in the nacelle (2),
**characterized in that** a sealing element (24) is formed between the nacelle housing (4) and the rotor hub (6) and/or between the nacelle housing (4) and a rotor shaft (15), which sealing element (24) is configured to seal the lubricating oil sump (18) from the environment, wherein in the operating state, the lubricating oil sump (18) is filled with lubricating oil (19) up to a lubricating oil level (20), wherein the sliding surfaces (17) are below the lubricating oil level (20) at least in some sections, and thus are immersed in the lubricating oil (19) present in the lubricating oil sump (18).

## Revendications

1. Nacelle (2) pour une éolienne (1), la nacelle (2) comprenant :
- un boîtier de nacelle (4) ;
- un moyeu de rotor (6) avec des pales de rotor disposées dessus ;
- un palier de rotor (8) pour le logement du moyeu de rotor (6) sur le boîtier de nacelle (4), dans lequel le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse (14), lubrifié avec de l'huile, dans lequel un carter à huile de lubrification (18) est prévu qui permet le logement d'une huile de lubrification (19) qui permet la lubrification de l'élément de palier lisse (14), dans lequel le carter à huile de lubrification (18) est réalisé dans la nacelle (2),
**caractérisé en ce que**, entre le boîtier de nacelle (4) et le moyeu de rotor (6) et/ou entre le boîtier de nacelle (4) et un arbre de rotor (15), est prévu un élément d'étanchéité (24) qui est conçu pour l'étanchéification du carter à huile de lubrification (18) par rapport à l'environnement, dans lequel, dans l'état de fonctionnement, le carter à huile de lubrification (18) est rempli d'huile de lubrification (19) jusqu'à un niveau d'huile de lubrification (20), dans lequel les surfaces de glissement (17) se trouvent, au moins à certains endroits, en dessous du niveau d'huile de lubrification (20) et plongent donc dans l'huile de lubrification (19) se trouvant dans le carter à huile de lubrification (18).

2. Nacelle (2) selon la revendication 1, **caractérisée en ce que** l'élément d'étanchéité (24) est conçu comme un joint d'étanchéité axial qui est disposé entre une face frontale (25) du boîtier de nacelle (4) et une face frontale (26) du moyeu de rotor (6).

3. Nacelle (2) selon la revendication 1, **caractérisée en ce que** l'élément d'étanchéité (24) est conçu comme un joint d'étanchéité radial qui est disposé entre le boîtier de nacelle (4) et le moyeu de rotor (6) et/ou entre le boîtier de nacelle (4) et l'arbre de rotor (15).

4. Nacelle (2) selon l'une des revendications précédentes, **caractérisée en ce que** l'élément d'étanchéité (24) est conçu comme une bague d'étanchéité lisse.

5. Nacelle (2) selon l'une des revendications précédentes, **caractérisée en ce que** l'élément d'étanchéité (24) comprend au moins deux segments qui peuvent être enfilés dans la direction radiale sur l'arbre de rotor (15).

6. Nacelle (2) selon l'une des revendications 1 à 3, **caractérisée en ce que** l'élément d'étanchéité (24) est conçu comme un joint d'étanchéité à labyrinthe.

7. Nacelle (2) selon la revendication 6, **caractérisée en ce que** le joint d'étanchéité à labyrinthe comprend un retour (40) qui conduit dans un carter à huile de lubrification (18).

8. Nacelle (2) selon l'une des revendications précédentes, **caractérisée en ce que** l'élément d'étanchéité (24) est logé dans le boîtier de nacelle (4) et le moyeu de rotor (6) est rotatif par rapport à l'élément d'étanchéité (24).

9. Nacelle (2) selon l'une des revendications précédentes, **caractérisée en ce que** l'élément d'étanchéité (24) entre en contacte avec une surface d'étanchéité (34) qui est mobile par rapport à l'élément d'étanchéité (24), dans lequel la surface d'étanchéité (34) comprend un revêtement de peinture lisse.

10. Nacelle (2) selon l'une des revendications précédentes, **caractérisée en ce que**, sur le moyeu de rotor (6) sur l'arbre de rotor (15), est disposé un manchon lisse (39) qui interagit avec l'élément d'étanchéité (24).

11. Nacelle (2) selon l'une des revendications précédentes, **caractérisée en ce que**, sur le moyeu de rotor (15), est réalisé un élément d'égouttage d'huile (38) sous la forme d'un écrou de piquage ou d'un bossage.

12. Nacelle (2) selon l'une des revendications précédentes, **caractérisée en ce que** deux éléments d'étanchéité (24) distants axialement entre eux sont prévus.

13. Éolienne (1) avec une nacelle (2), cette nacelle (2) comprenant :
- un boîtier de nacelle (4) ;
- un moyeu de rotor (6) ;
- un palier de rotor (8) pour le logement du moyeu de rotor (6) sur le boîtier de nacelle (4), dans lequel le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse (14), lubrifié avec de l'huile, dans lequel un carter à huile de lubrification (18) est prévu qui permet le logement d'une huile de lubrification (19) qui permet la lubrification de l'élément de palier lisse (14), dans lequel le carter à huile de lubrification (18) est réalisé dans la nacelle (2),
**caractérisé en ce que**, entre le boîtier de nacelle (4) et le moyeu de rotor (6) et/ou entre le boîtier de nacelle (4) et un arbre de rotor (15), est prévu un élément d'étanchéité (24) qui est conçu pour l'étanchéification du carter à huile de lubrification (18) par rapport à l'environnement, dans lequel, dans l'état de fonctionnement, le carter à huile de lubrification (18) est rempli d'huile de lubrification (19) jusqu'à un niveau d'huile de lubrification (20), dans lequel les surfaces de glissement (17) se trouvent, au moins à certains endroits, en dessous du niveau d'huile de lubrification (20) et plongent donc dans l'huile de lubrification (19) se trouvant dans le carter à huile de lubrification (18).
